# EUROPEAN PATENT SPECIFICATION

(11) **EP 2 724 751 B1**
(45) Date of publication and mention of the grant of the patent: **15.05.2019**
(21) Application number: 11868421.6
(22) Date of filing: 22.06.2011
(51) Int. Cl.: A62B 35/00

(54) **HEAD-UP DISPLAY AND CONTROL METHOD**
HEAD-UP-ANZEIGE UND STEUERVERFAHREN
AFFICHAGE TÊTE HAUTE ET PROCÉDÉ DE COMMANDE

(43) Date of publication of application: 30.04.2014
(73) Proprietor: Pioneer Corporation, Tokyo 113-0021 (JP); Pioneer System Technologies Corporation, Sendai-shi, Miyagi 981-0912 (JP)
(72) Inventor: KIMURA, Kota, Kawagoe-shi Saitama 350-8555 (JP)
(74) Representative: Gill Jennings & Every LLP
(86) International application number: PCT/JP2011/064235
(87) International publication number: WO 2012/176288

(56) References cited:
- JP-A- 2003 200 755
- JP-A- 2005 107 917
- JP-A- 2005 127 996
- JP-A- 2006 162 442
- US-A1- 2005 154 505

## Description

### TECHNICAL FIELD

The present invention relates to a technology for displaying information.

### BACKGROUND TECHNIQUE

Conventionally, there is known a technique for letting a display image indicating information on driving operation of the vehicle be seen from the eye location (eye point) of the driver as a virtual image. For example, Patent Reference-1 discloses a system having a combiner and a case for housing a light source, the system letting predetermined information be seen as a virtual image through the combiner.

The Patent Reference-2 discloses the preamble of claim 1.

Patent Reference-1: Japanese Patent Application Laid-open under No. 2002-052953
Patent Reference-2: US 2005/154505 A1.

### DISCLOSURE OF INVENTION

### PROBLEM TO BE SOLVED BY THE INVENTION

Conventionally, if the display by the head-up display has been started, the display continues until the user purposely performs an operation for hiding the display. However, if there exists an obstacle in the vicinity to be noted while driving such as an oncoming vehicle, it is necessary to let the driver notice the obstacle prior to the head-up display.

The above is an example of the problem to be solved by the present invention. An object of the present invention is to provide a head-up display capable of surely ensuring the visibility of an obstacle in the vicinity and the corresponding control method.

### MEANS FOR SOLVING THE PROBLEM

One invention is a head-up display comprising: a measuring unit configured to measure a distance to an obstacle existing in a running direction of an own vehicle; a light source unit having a attaching portion and projecting light for displaying an image onto a projection portion to supply a viewer with the light through the projection portion, the attaching portion being capable of attaching to the own vehicle; and a control unit configured to restrict display of all or a part of information if a distance, to right-hand or left-hand direction of the own vehicle perpendicular to the running direction, between the obstacle and the own vehicle is equal to or shorter than a predetermined criterion distance when the own vehicle has moved towards the running direction for a predetermined time or by a predetermined distance.

Another invention is a control method executed by a head-up display, the head-up display attaching to a vehicle, the head-up display including a measuring unit and a light source unit, the measuring unit being configured to measure a distance to an obstacle, existing in a running direction of the vehicle, the light source unit projecting light for displaying an image onto a projection portion to supply a viewer with the light through the projection portion, the control method comprising a control process to restrict display of a part of information at a time when the vehicle and the obstacle pass each other or a predetermined time before the time if a distance, between the vehicle and the obstacle is equal to or shorter than a predetermined criterion distance when the vehicle passes the obstacle by moving towards the running direction.

### BRIEF DESCRIPTION OF THE DRAWINGS

FIG. 1A shows a schematic configuration of a head-up display. FIG. 1B shows various sensors which connect to the control unit.
FIGS. 2A and 2B each shows a positional relationship between the own vehicle and the oncoming vehicle.
FIGS. 3A and 3B each shows a positional relationship between the own vehicle and the fences provided on the shoulder of the road where the own vehicle is running.
FIGS. 4A and 4B each shows a positional relationship between the own vehicle and the forward vehicle.
FIG. 5A shows an example of display by the head-up display before the execution of the display control according to the first pattern. FIG. 5B shows an example of display by the head-up display according to the first pattern.
FIGS. 6A and 6B each shows an example of display by the head-up display according to the second pattern.
FIG. 7A shows an example of a correspondence table of the non-display range corresponding to each rightward distance between the own vehicle and the obstacle. FIG. 7B shows an example of a correspondence table of the non-display range corresponding to each leftward distance between the own vehicle and the obstacle.
FIG. 8 shows an example of display by the head-up display according to the third pattern.
FIGS. 9A and 9B each shows an example of display by the head-up display according to the fourth pattern.
FIG. 10 shows an example of a correspondence table of the tone of the virtual image corresponding to each forward distance between the own vehicle and the forward vehicle.
FIG. 11 shows an example of a flowchart indicating the procedure of the process according to the first pattern.
FIG. 12 shows an example of a flowchart indicating the procedure of the process according to the second pattern.
FIG. 13 shows an example of a flowchart indicating the procedure of the process according to the third pattern.
FIG. 14 shows an example of a flowchart indicating the procedure of the process according to the fourth pattern.
FIG. 15 shows an example of another configuration of the head-up display.

### DETAILED DESCRIPTION OF THE PREFERRED EMBODIMENTS

According to one aspect of the present invention, there is provided a head-up display comprising: a measuring unit configured to measure a distance to an obstacle existing in a running direction of an own vehicle; a light source unit having a attaching portion and projecting light for displaying an image onto a projection portion to supply a viewer with the light through the projection portion, the attaching portion being capable of attaching to the own vehicle; and a control unit configured to restrict display of all or a part of information if a distance, to right-hand or left-hand direction of the own vehicle perpendicular to the running direction, between the obstacle and the own vehicle is equal to or shorter than a predetermined criterion distance when the own vehicle has moved towards the running direction for a predetermined time or by a predetermined distance.

The above head-up display includes a measuring unit and a light source unit and a control unit. The measuring unit measures a distance to an obstacle existing in a running direction of an own vehicle. The term "obstacle" herein indicates any material being to be noted while driving. The term "own vehicle" herein indicates a vehicle on which the head-up display is mounted. The light source unit has an attaching portion capable of attaching to the own vehicle and projects light for displaying an image onto a projection portion to supply a viewer with the light through the projection portion. The control unit restricts display of all or apart of information if a distance, to right-hand or left-hand direction of the own vehicle perpendicular to the running direction, between the obstacle and the own vehicle is equal to or shorter than a predetermined criterion distance when the own vehicle has moved towards the running direction for a predetermined time or by a predetermined distance. Thereby, at the normal time, the head-up display displays information for assisting the driving, whereas the head-up display prioritizes the visibility of the obstacle over the display by the head-up display at the time of coming close to the obstacle. Thus, the head-up display can surely ensure the security.

In one mode of the head-up display, the head-up display further comprises a unit configured to recognize a shape of a road where the own vehicle is going to run or a route where the own vehicle is going to run, wherein the control unit restricts the display of information by the light source unit if the distance, to the right-hand or the left-hand direction, between the obstacle and the own vehicle is equal to or shorter than a predetermined distance when the own vehicle has moved based on the shape of the road or the route.

In another mode of the head-up display, the head-up display further comprises an input unit for accepting an input of attribute information relating to the own vehicle, wherein the control unit determines the criterion distance based on the inputted attribute information.

In another mode of the head-up display, the attribute information is information on a position of a steering wheel of the own vehicle, and the control unit changes the criterion distance corresponding to the left-hand direction of the own vehicle and the criterion distance corresponding to the right-hand direction of the own vehicle based on the inputted attribute information.

In another mode of the head-up display, the head-up display further comprises a unit configured to recognize a shape of a road where the own vehicle is going to run or a route where the own vehicle is going to run, wherein the control unit restricts the display of information by the light source unit if the distance, to the right-hand or the left-hand direction, between the obstacle and the own vehicle is equal to or shorter than a predetermined distance when the own vehicle has moved based on the shape of the road or the route.

In another mode of the head-up display, the control unit limits a range of the display based on positional relationship between the own vehicle and the obstacle. In this mode, the head-up display limits the range of the display based on the position of the obstacle at the time of coming close to the obstacle thereby to surely ensure the visibility of the obstacle.

In another mode of the head-up display, the shorter the distance between the own vehicle and the obstacle is, the more the control unit expands a range where the display is restricted. Thereby, the head-up display can properly determine a range where the display is restricted with accordance to the distance between the obstacle and the own vehicle.

In another mode of the head-up display, the control unit limits a range of the display based on positional relationship between the own vehicle and the obstacle and shifts the display to be displayed in a restricted range into a non-restricted range. Thereby, at the time of coming close to the obstacle, the head-up display can ensure the visibility of the obstacle by restricting the display range based on the position of the obstacle, and can also continue to display necessary information without reducing the contents to be displayed.

In another mode of the head-up display, the shorter the distance between the own vehicle and the obstacle is, the more the control unit lightens all or a part of the display. The term "lighten" herein includes hiding the display. Even in this mode, the head-up display can ensure the visibility of the obstacle in accordance with the distance to the obstacle.

In another mode of the head-up display, the control unit lightens only a uniformly-colored area of the display. Thereby, at the time of coming close to the obstacle, the head-up display can ensure the visibility of the obstacle while continuing to display information necessary for the driving.

In a preferred example of the head-up display, the obstacle is an oncoming vehicle to the own vehicle or a forward vehicle. In another preferred example of the head-up display, the obstacle is a wall or a fence near the own vehicle.

In another mode of the head-up display, the projection portion is a front window of the own vehicle or a combiner arranged near the front window, and the light source unit projects light onto the front window or the combiner to display the information recognized through an virtual image. Thereby, preferably, the head-up display can display information for assisting the driving.

According to another aspect of the present invention, there is provided a control method executed by a head-up display including a measuring unit and a light source unit, the measuring unit being configured to measure a distance to an obstacle existing in a running direction of an own vehicle, the light source unit having a attaching portion and projecting light for displaying an image onto a projection portion to supply a viewer with the light through the projection portion, the attaching portion being capable of attaching to the own vehicle, the control method comprising a control process to restrict display of all or a part of information if a distance, to right-hand or left-hand direction of the own vehicle, between the obstacle and the own vehicle is equal to or shorter than a predetermined criterion distance when the own vehicle has moved towards the running direction for a predetermined time or by a predetermined distance. By executing the above-mentioned control method, the head-up display can ensure the security by prioritizing the visibility of the obstacle over the display by the head-up display at the time of coming close to the obstacle, whereas it displays the information for assisting the driving at a normal time.

### EMBODIMENT

Now, a preferred embodiment of the present invention will be described below with reference to the attached drawings.

### [Schematic Configuration]

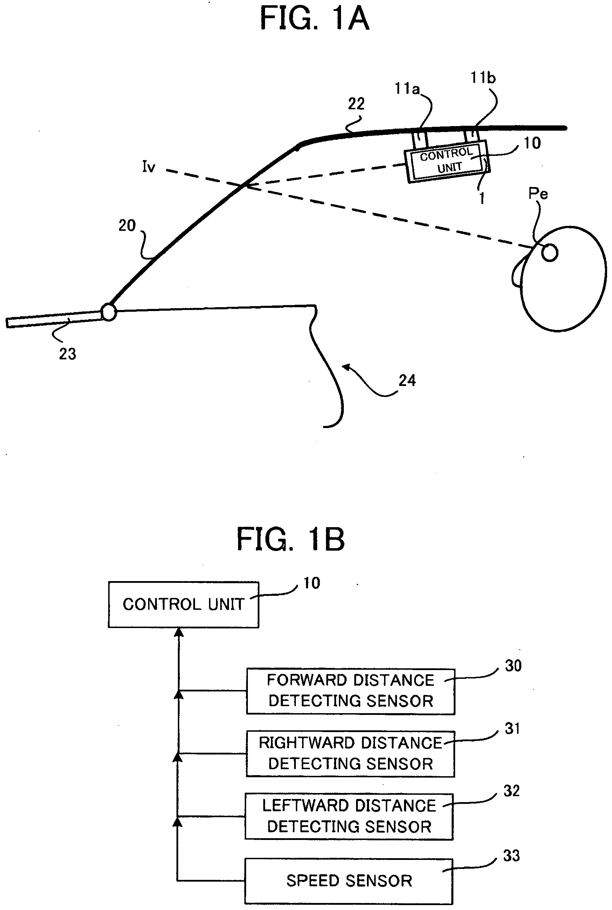

FIG. 1A shows a schematic configuration of a head-up display according to the embodiment. As shown in FIG. 1A, the head-up display according to the embodiment includes a light source unit 1, and is installed in a vehicle having a front window 20, a ceiling board 22, a hood 23 and a dashboard 24.

The light source unit 1 is provided on the ceiling board 22 in the vehicle interior through the support parts 11a and 11b, and emits the light for displaying images towards the front window 20, each of the images indicating information (hereinafter referred to as "driving assistance information") for assisting the driving such as map information including information on the present location, route guide information and a vehicle speed. In particular, under the control of the control unit 10, the light source unit 1 generates an original image (real image) of the display image in the light source unit 1, and emits the light for displaying the image towards the front window 20 thereby to let the driver visually recognize the virtual image "Iv". The display image emitted from the light source unit 1 is projected onto the front window 20, and the front window 20 shows the display image as the virtual image Iv by reflecting the display image towards an eye position (hereinafter referred to as "eye point Pe") of the driver. Each of the support parts 11a and 11b is an example of "the attaching portion" according to the present invention. The front window 20 is an example of "the projection portion" according to the present invention.

The control unit 10 includes a CPU (Central Processing Unit), a ROM (Read Only Memory) and a RAM (Random Access Memory) which are not shown, and controls the entire head-up display. The control unit 10 is an example of "the control unit" according to the present invention.

In addition, the control unit 10 receives the detection signals supplied from various kinds of sensors. A description thereof will be given with reference to FIG. 1B. FIG. 1B shows an overview of various sensors which send the detection signals to the control unit 10. As shown in FIG. 1B, the control unit 10 receives each detection signal from the forward distance detecting sensor 30, the rightward distance detecting sensor 31, the leftward distance detecting sensor 32 and the speed sensor 33. The forward distance detecting sensor 30 detects the distance (referred to as "front distance FL") between the vehicle (referred to as "own vehicle") on which the head-up display is mounted and an obstacle existing in front of the own vehicle such as a vehicle, a wall or a fence and a person. The rightward distance detecting sensor 31 detects the distance (referred to as "rightward direction RL") between the own vehicle and the obstacle in the rightward direction perpendicular to the running direction of the own vehicle, i.e., the right side direction of the own vehicle. The leftward distance detecting sensor 32 detects the distance (referred to as "leftward direction LL") between the own vehicle and the obstacle in the leftward direction perpendicular to the running direction of the own vehicle, i.e., the left side direction of the own vehicle. The speed sensor 33 detects the running speed of the own vehicle. Each of the forward distance detecting sensor 30, the rightward distance detecting sensor 31, the leftward distance detecting sensor 32 and the speed sensor 33 is an example of "measuring unit" according to the present invention.

### [Control Method]

Next, a concrete description will be given of the process executed by the control unit 10. In summary, the control unit 10 restricts the display of information recognized through the virtual image Iv if the distance between the own vehicle and the obstacle is equal to or shorter than a predetermined distance. Thereby, the control unit 10 ensures the visibility of the obstacle to be noted during driving and enhances the security.

Concrete descriptions will be given of the timing of restricting the display of information recognized through the virtual image Iv and how to restrict the display of information recognized through the virtual image Iv.

### 1. Timing of Restricting Display

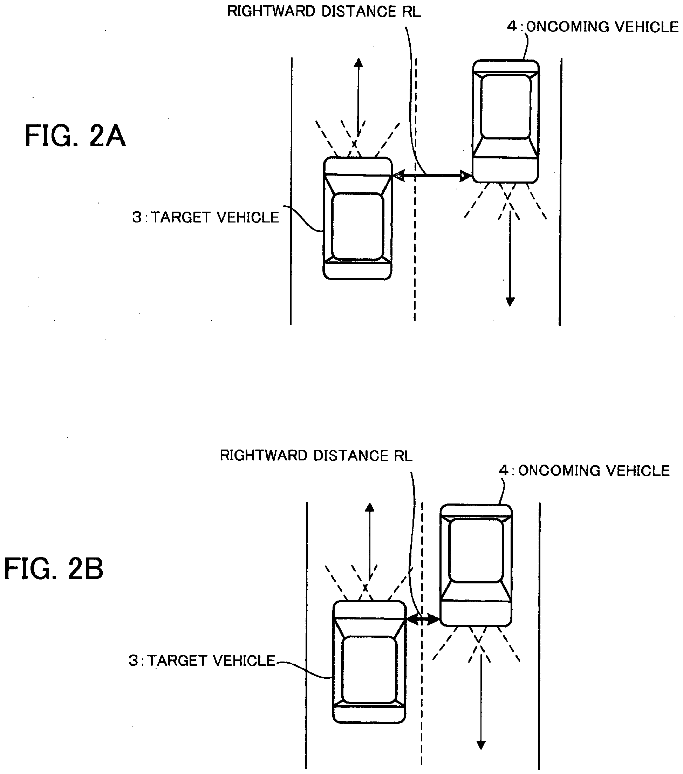

The control unit 10 restricts the display of information recognized through the virtual image Iv if at least one of the forward distance FL, the rightward distance RL and the leftward distance LL is equal to or shorter than each predetermined distance. For example, each of the predetermined distance is determined with respect to each of the forward distance FL, the rightward distance RL, and the leftward distance LL and set to a proper value in advance through experimental trials. The description thereof in detail will be given with reference to FIGS. 2A to 4B.

FIGS. 2A and 2B show the positional relationship between the own vehicle 3 and the oncoming vehicle 4. In particular, FIG. 2A shows a case where the rightward distance RL is longer than the predetermined distance at the time when the own vehicle 3 and oncoming vehicle 4 pass each other. FIG. 2B shows a case where the rightward distance RL is equal to or shorter than the predetermined distance at the time when the own vehicle 3 and oncoming vehicle 4 pass each other. Namely, FIGS. 2A and 2B show each distance to the oncoming vehicle 4 in the rightward or the leftward direction of the own vehicle in a case where the own vehicle 3 advances in the running direction in a predetermined period or by predetermined distance. The above-mentioned predetermined period and the predetermined distance indicate a time or a distance by which the own vehicle 3 and the oncoming vehicle 4 pass each other due to the change of the present positional relationship between own vehicle 3 and the oncoming vehicle 4.

In case of FIG. 2A, the control unit 10 does not restrict the display of information recognized through the virtual image Iv because the control unit 10 determines that there is a sufficient distance between the own vehicle 3 and the oncoming vehicle 4 at the time when they pass each other. In this case, the control unit 10 displays the driving assistance information recognized through the virtual image Iv without the restriction thereby to make the driver easily see the driving assistance information. In contrast, in case of FIG. 2B, the control unit 10 restricts the display through the virtual image Iv in accordance with the positional relationship between the own vehicle 3 and the oncoming vehicle 4 because the control unit 10 determines that the distance between the own vehicle 3 and the oncoming vehicle 4 at the time when they pass each other is not sufficient. For example, the control unit 10 restricts the display through the virtual image Iv at or shortly before the time when they pass each other. Thereby, the control unit 10 ensures the visibility of the oncoming vehicle 4 and lets the driver pay attention to the oncoming vehicle 4.

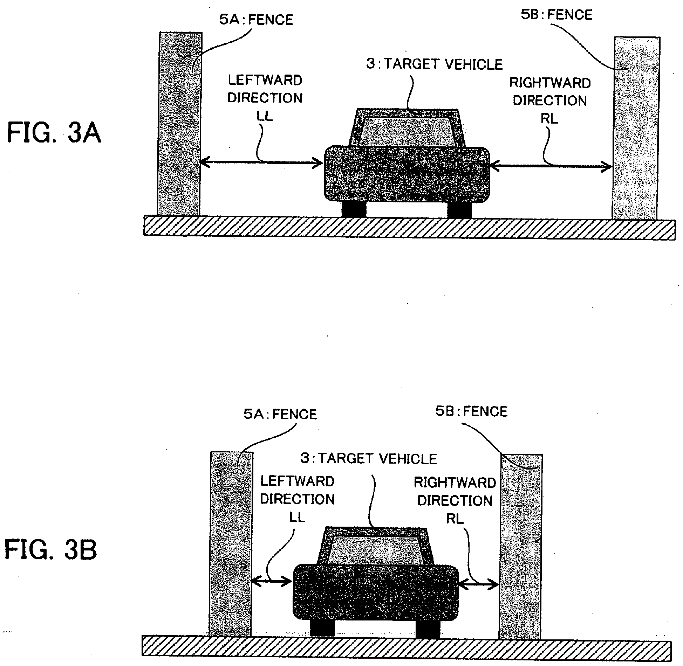

FIGS. 3A and 3B each shows the positional relationship between the own vehicle 3 and the fences 5A and 5B provided on the shoulder of the road where the own vehicle 3 is running. In particular, FIG.3A shows a case where the leftward distance LL between the own vehicle 3 and the fence 5A is longer than the predetermined distance and where the rightward distance RL between the own vehicle 3 and the fence 5B is longer than the predetermined distance. FIG. 3B shows a case where the leftward distance LL between the own vehicle 3 and the fence 5A is equal to or shorter than the predetermined distance and/or where the rightward distance RL between the own vehicle 3 and the fence 5B is equal to or shorter than the predetermined distance.

In case of FIG. 3A, the control unit 10 does not restrict the display of information recognized through the virtual image Iv because the control unit 10 determines that the distances between each of the fences 5A and 5B and the own vehicle 3 are sufficient due to the wide width of the road. In contrast, in case of FIG. 3B, the control unit 10 restricts the display through the virtual image Iv in accordance with the positional relationships between the own vehicle 3 and each of the fences 5A and 5B because the distance between the fences 5A and 5B and the own vehicle 3 is not sufficient due to the narrow width of the road. The control unit 10 may restrict the display through the virtual image Iv even at the timing before the rightward distance RL or the leftward distance LL between the own vehicle 3 and the fence 5A or 5B becomes actually not sufficient. For example, if the distance in the side direction of the own vehicle 3 between the own vehicle 3 and an obstacle such as a wall and a fence is estimated to become equal to or shorter than a predetermined distance at the time when the obstacle existing in the running direction is recognized, the display recognized through the virtual image Iv may be restricted in advance. Thereby, it is possible to ensure the visibility by the driver so that the safety is ensured. Thus, the control unit 10 ensures the visibility of the fences 5A and 5B and makes the driver pay attention to the walls 5A and 5B.

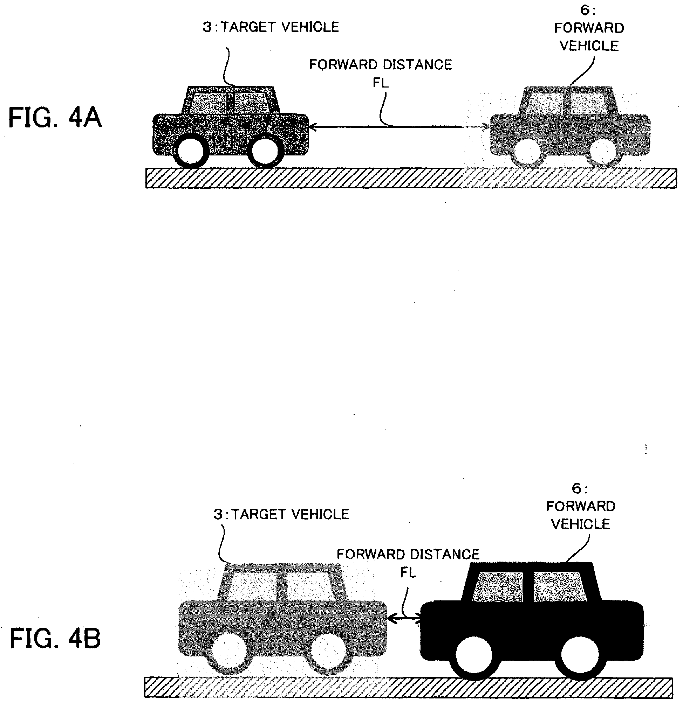

FIGS. 4A and 4B each shows the positional relationship between the own vehicle 3 and the forward vehicle 6. In particular, FIG. 4A shows a case where the forward distance FL between the own vehicle 3 and the forward vehicle 6 is longer than a predetermined distance, and FIG. 4B shows a case where the forward distance FL between the own vehicle 3 and the forward vehicle 6 is equal to or shorter than the predetermined distance.

In case of FIG. 4A, the control unit 10 does not limit the range of the display through the virtual image Iv because the control unit 10 determines that the distance between the own vehicle 3 and the forward vehicle 6 is sufficient. In this case, the control unit 10 displays the driving assistance information through the virtual image Iv thereby to make the driver easily see the driving assistance information. In contrast, in case of FIG. 4B, the control unit 10 restricts the display of the virtual image Iv in accordance with the positional relationship between the own vehicle 3 and the forward vehicle 6 because the control unit 10 determines that the distance between the own vehicle 3 and the forward vehicle 6 is not sufficient. Thereby, the control unit 10 ensures the visibility of the forward vehicle 6 and makes the driver pay attention to the forward vehicle 6.

### 2. Method of Restricting Display of Virtual Image Iv

According to the above-mentioned timing, the control unit 10 restricts the display range of the virtual image Iv and/or the manner of the display of the virtual image Iv. Here, detailed descriptions will be given of a first pattern to a fourth pattern classified according to the concrete manners of the method of restricting the display of the virtual image Iv executed by the control unit 10. The first pattern to the fourth pattern may be executed in combination as mentioned later.

### (1) First Pattern

According to the first pattern, on the basis of the positional relationship between the own vehicle and the obstacle, the control unit 10 sets a part of the display range of the virtual image Iv as a non-displayed range. Thereby, the control unit 10 ensures the sufficient visibility of the obstacle.

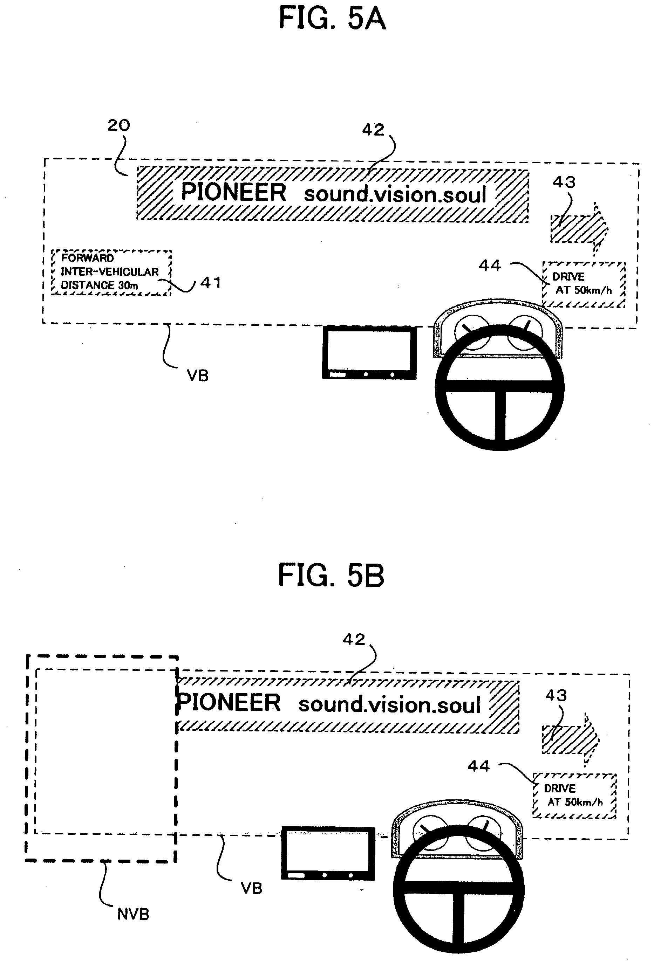

FIG. 5A shows an example of the display by the head-up display at a normal time before the restriction of the display of information recognized through the virtual image Iv. In FIG. 5A and the following drawings, the term "display range VB" indicates a range in the front window 20 where the light emitted by the light source unit 1 is projected, i.e., a range capable of displaying information through the virtual image Iv. In FIG. 5A, the display range VB is virtually indicated by the dashed frame over the front window 20. In the display range VB, there exists the first information display 41 indicating the inter-vehicular distance between the own vehicle and the forward vehicle, the second information display 42 indicating a predetermined logo, the third information display 43 shown as the arrow indicating the next running direction and the fourth information display 44 indicating the velocity of the own vehicle. As shown in FIG. 5A, at the normally-displaying time before the restriction of the display of the virtual image Iv, the control unit 10 displays each kind of driving assistance information through the virtual image Iv by effective use of a substantially-whole display range VB.

FIG. 5B shows an example of the display by the head-up display according to the first pattern in a case where the leftward distance LL between the own vehicle and the obstacle is equal to or shorter than a predetermined distance. In this case, as shown in FIG. 5B, the control unit 10 does not display any information through the virtual image Iv on the non-display range "NVB" virtually shown by the dashed frame, the non-display range NVB being provided in a predetermined range (the left 1/4 in this example) of the display range VB expanding from the left edge thereof. Thereby, the first information display 41 and the left part of the second information display 42 are hidden as shown in FIG. 5A. In other words, in this case, the control unit 10 hides a part of the display range VB corresponding to the virtual image Iv existing on a same side of the obstacle in accordance with the position of the obstacle to be noted by the driver. Thereby, the control unit 10 can let the driver clearly see the obstacle existing on the left of the own vehicle. In particular, by hiding the display of the information through the virtual image Iv in the non-display range NVB having a predetermined size, the control unit 10 can prevent the driver from getting confused because the size of the virtual image Iv displayed through the head-up display does not change unlike the second pattern mentioned later.

### (2) Second Pattern

According to the second pattern, in addition to the first pattern, the shorter the distance between the own vehicle and the obstacle is, the more the control unit 10 expands the non-display range NVB. Thereby, the control unit 10 flexibly sets the non-display range NVB in accordance with the distance between the own vehicle and the obstacle.

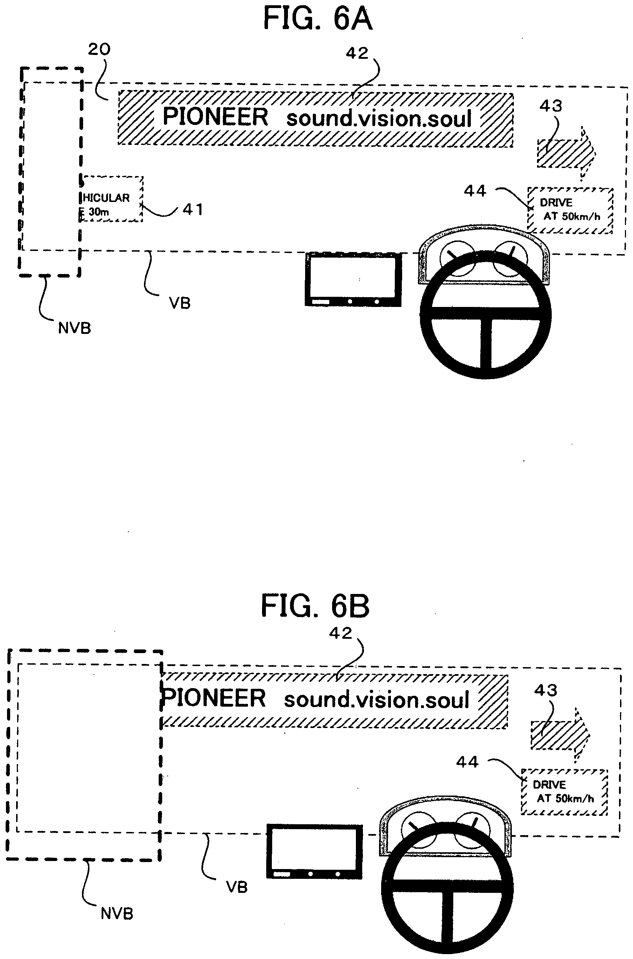

FIG. 6A shows an example of the display by the head-up display in a case where the leftward distance LL between the own vehicle and the obstacle is "1m", the obstacle existing near the left side of the own vehicle. As shown in FIG. 6A, since the leftward distance LL between the own vehicle and the obstacle is "1m", the non-display range NVB is set to a predetermined range on the left side of the display range VB in accordance with the distance.

FIG. 6B shows an example of the display by the head-up display in a case where the leftward distance LL between the own vehicle and the obstacle is "50cm", the obstacle existing near the left side of the own vehicle. In case of FIG. 6B, the non-display range NVB is expanded compared to the case of FIG. 6A since the left ward distance LL between the own vehicle and the obstacle becomes shorter. In this way, by changing the non-display range NVB in accordance with the distance between the own vehicle and the obstacle, the control unit 10 can properly determine the non-display range NVB.

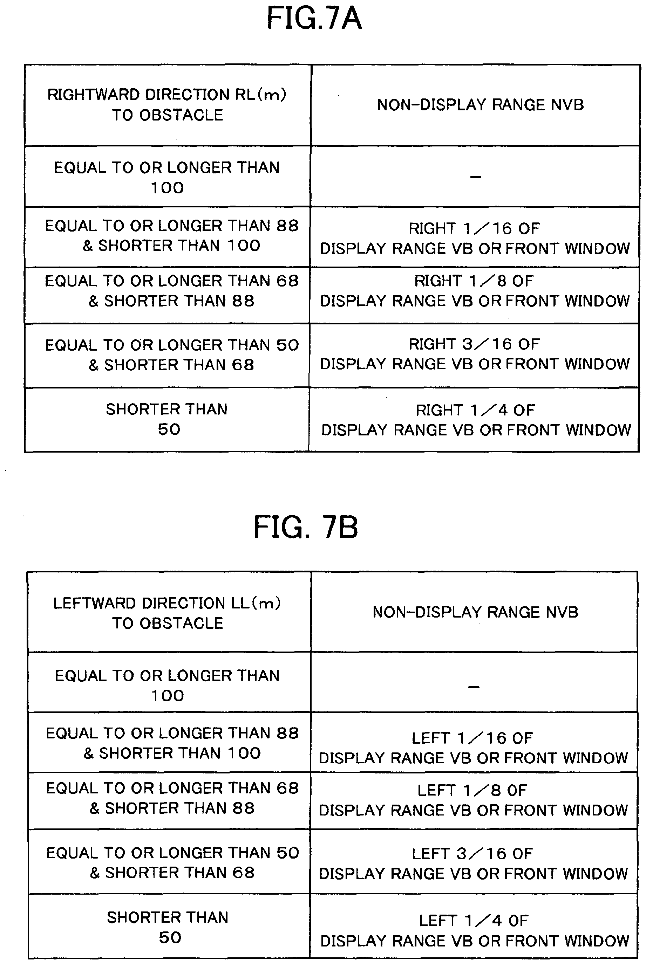

Next, with reference to FIGS. 7A and 7B, a description will be given of a concrete range of the non-display range NVB determined by the control unit 10 according to the second pattern. FIG. 7A shows an example of a correspondence table between the rightward distance RL and the non-display range NVB. FIG. 7B shows an example of a correspondence table between the leftward distance LL and the non-display range NVB. The control unit 10 stores a table or a map prepared through experimental trials as shown in FIGS. 7A and 7B on the memory in advance.

As shown in FIGS. 7A and 7B, if the distance between the own vehicle and the obstacle is equal to or longer than "100cm", the control unit 10 does not set the non-display range NVB because the control unit 10 determines that there is no necessity to restrict the display of the virtual image Iv. In contrast, if the distance between the own vehicle and the obstacle is shorter than "50cm", the control unit 10 sets the right 1/4 of the display range VB or the front window 20 as the non-display range NVB because the control unit 10 determines that it should give first priority to the visibility of the obstacle. If the distance between the own vehicle and the obstacle is equal to or longer than "50cm" and shorter than "100cm", the shorter the distance between the own vehicle and the obstacle is, the more the control unit 10 expands the non-display range NVB to be set in stages.

Thereby, there is such an effect that the driver can efficiently and completely recognize the virtual image Iv.

### (3)Third Pattern

According to the third pattern, instead of the first pattern or the second pattern, or in addition to the second pattern, the control unit 10 determines the non-display range NVB in accordance with the positional relationship between the own vehicle and the obstacle, and shifts the display to be displayed in the non-display range NVB to the display range VB other than the non-display range NVB. Thereby, the control unit 10 displays the driving assistance information necessary for the driver without omitting it and ensures the visibility of the obstacle.

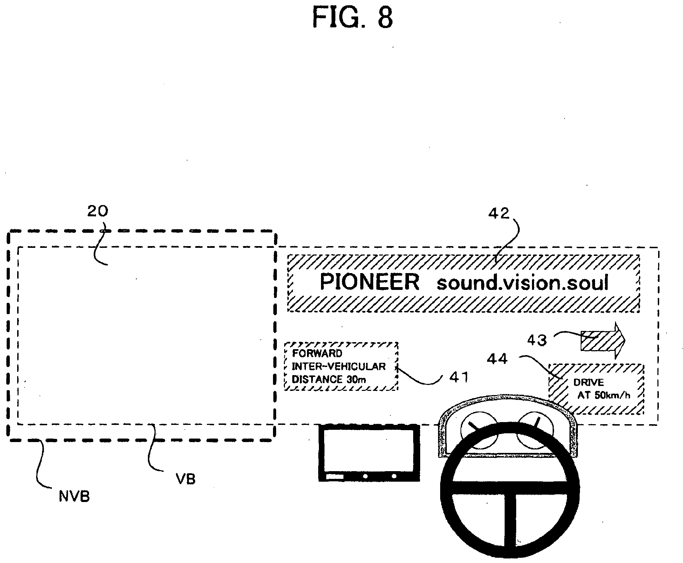

FIG. 8 shows an example of the display by the head-up display according to the third pattern in a case where the leftward distance LL (1m in this example) between the own vehicle and the obstacle is equal to or shorter than a predetermined distance. As shown in FIG. 8, the control unit 10 sets a predetermined range (the left 1/2 in this example) of the non-display range NVB expanding from the left edge thereof as the non-display range NVB. In addition, the control unit 10 shifts the first information display 41 and the second information display 42 overlapping with the non-display range NVB to the right side of the display range VB other than the non-display range NVB. In this case, preferably, as shown in FIG. 8, the control unit 10 changes the positions and sizes of the first information display 41 to the fourth information display 44 so that all of the first information display 41 to the fourth information display 44 is within the display range VB other than the non-display range NVB if necessary.

It is noted that the control unit 10 may further expand the non-display range NVB as the distance between the own vehicle and the obstacle is shorter even in case of the third pattern as with the second pattern. Even in this case, the control unit 10 shifts the display overlapping with the non-display range NVB so that the whole display is within the display range VB other than the non-display range NVB. Thereby, there is such an effect that the information is surely provided to the driver even if the obstacle and the own vehicle get close to each other.

### (4) Fourth Pattern

According to the fourth pattern, instead of the first to the third patterns or in addition to these patterns, the shorter the distance between the own vehicle and the obstacle is, the more strictly the control unit 10 limits the tone i.e., the color strength, of the display of the virtual image Iv. Thereby, the control unit 10 further enhances the visibility of the obstacle as the own vehicle comes closer to the obstacle.

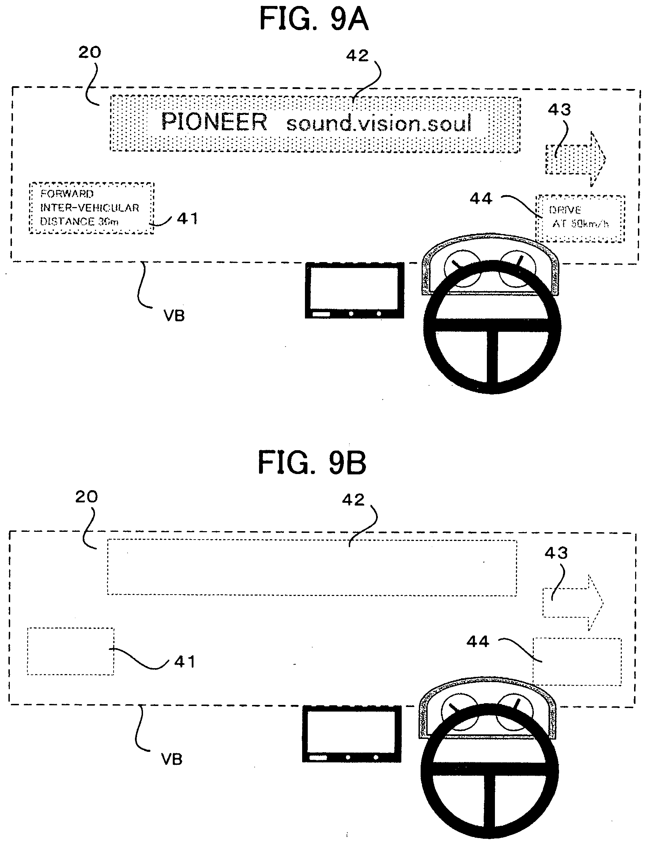

FIG. 9A shows an example of the display by the head-up display according to the fourth pattern in a case where the inter-vehicular distance between the own vehicle and the forward vehicle is "20m". As shown in FIG. 9A, the control unit 10 lightens the first information display 41 to the fourth information display 44 more than usual since the distance between the own vehicle and the forward vehicle is short to some extent.

FIG. 9B shows an example of the display by the head-up display according to the fourth pattern in a case where the inter-vehicular distance between the own vehicle and the forward vehicle is "15m". As shown in FIG. 9B, in this case, the control unit 10 does not display the first information display 41 to the fourth information display 44. In FIG. 9B, for convenience of explanation, each range where the first information display 41 to the fourth information display 44 are to be originally shown is indicated by the dashed frame.

In this way, according to the fourth pattern, the control unit 10 further lightens the first information display 41 to the fourth information display 44 as the distance between the own vehicle and the forward vehicle is shorter, and hides these displays if the distance between the own vehicle and the forward vehicle is within a predetermined distance. Thereby, the control unit 10 ensures the visibility of the forward vehicle and lets the driver pay attention to the forward vehicle when the own vehicle and the forward vehicle get close to each other.

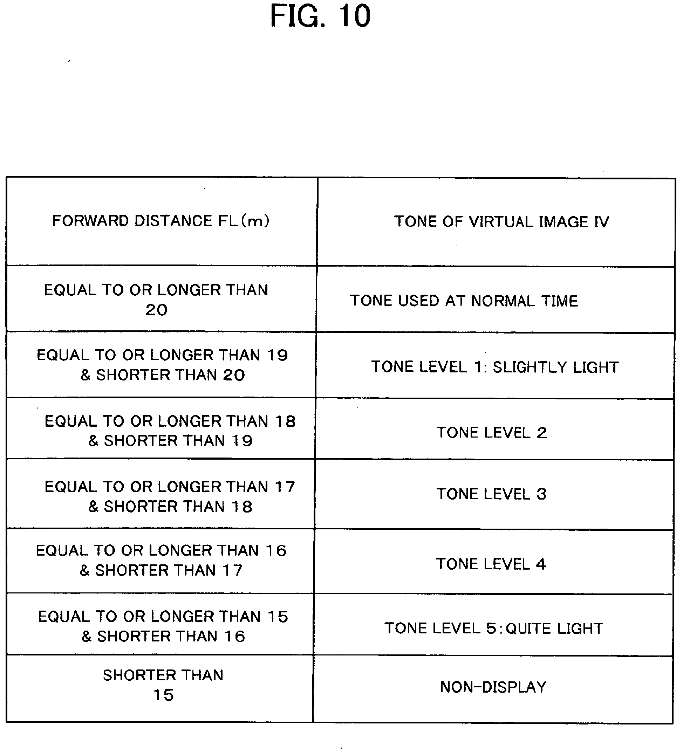

Next, with reference to FIG. 10, a description will be given of a concrete example that the control unit 10 sets the tone of the display through the virtual image Iv according to the fourth pattern. FIG. 10 shows an example of the correspondence table between the forward distance FL and the tone of the virtual image Iv. The control unit 10 stores a table or a map as shown in FIG. 10 prepared through experimental trials on the memory in advance. In FIG. 10, the terms "tone level 1" to "tone level 5" each indicates the degree of the tone of the display of the virtual image Iv. In particular, the term "tone level 1" indicates the darkest tone and the term "tone level 5" indicates the lightest tone.

As shown in FIG. 10, if the forward distance FL between the own vehicle and the forward vehicle is at least "20m", the control unit 10 sets the tone of the virtual image Iv to the normal tone. If the forward distance FL between the own vehicle and the forward vehicle is between "20m" and "15m", the control unit 10 lightens the tone of the virtual image Iv in stages as the forward distance FL between the own vehicle and the forward vehicle becomes shorter. If the forward distance FL between the own vehicle and the forward vehicle is shorter than "15m", the control unit 10 does not display the virtual image Iv. Thereby, the control unit 10 properly determines the tone of the display of the virtual image Iv in accordance with the forward distance FL, and ensures the visibility of the forward vehicle.

When the fourth pattern and either one of the first pattern and the second pattern is used in combination, the control unit 10 may lighten the display of the virtual image Iv instead of hiding the information in the non-display range NVB, for example. In another example, in addition to hiding the display in the non-display range NVB, the control unit 10 may lighten the display in the display range VB other than the non-display range NVB in accordance with the distance between the own vehicle and the obstacle. Even when the third pattern and the fourth pattern is used in combination, the control unit 10 may also lighten the display in the display range VB other than the non-display range NVB in accordance with the distance between the own vehicle and the obstacle in addition to hiding the display in the non-display range NVB.

### [Process Flow]

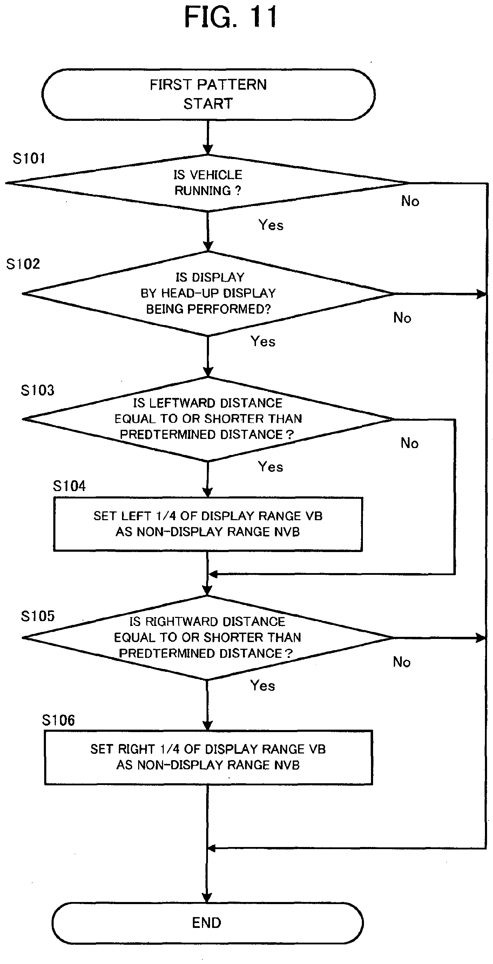

Next, with reference to FIGS. 11 to 14, concrete descriptions will be given of the procedures of the process executed by the control unit 10 according to each of the first to fourth patterns.

### (1). First Pattern

FIG. 11 shows an example of a flowchart indicating the procedure of the process executed by the control unit 10 according to the first pattern. The control unit 10 repeatedly executes the process of the flowchart shown in FIG. 11 in a predetermined cycle, for example.

First, the control unit 10 determines whether or not the own vehicle is running (step S101). For example, on the basis of detection signals sent from the speed sensor 33, the control unit 10 determines whether or not the own vehicle is running. Then, when the control unit 10 determines that the own vehicle is running (step S101; Yes), the control unit 10 determines whether or not the display by the head-up display is being performed (step S102) . Then, when the control unit 10 determines that the display by the head-up display is being performed (step S102; Yes), the control unit 10 proceeds with the process at step S103.

In contrast, when the control unit 10 determines that the own vehicle is not running (step S101; No) or that the display by the head-up display is not being performed (step S102; No), the control unit 10 terminates the process of the flowchart.

Next, the control unit 10 determines whether or not the leftward distance LL is equal to or shorter than a predetermined distance (step S103). The term "predetermined distance" herein indicates the threshold of the leftward distance LL between the own vehicle and the obstacle for judging the necessity for the driver to especially pay attention to the obstacle, and it is determined in advance through experimental trials and stored on the memory of the control unit 10, for example. When the leftward distance LL is equal to or shorter than the predetermined distance (step S103; Yes), the control unit 10 sets the left 1/4 of the display range VB as the non-display range NVB (step S104) Thereby, the control unit 10 ensures the visibility of the obstacle existing in the leftward direction. In contrast, when the control unit 10 determines that the leftward distance LL is longer than the predetermined distance (step S103; No), the control unit 10 proceeds with the process at step S105.

Next, the control unit 10 determines whether or not the rightward distance RL is equal to or shorter than a predetermined distance (step S105). The term "predetermined distance" herein indicates the threshold of the rightward distance RL between the own vehicle and the obstacle for judging the necessity for the driver to especially pay attention to the obstacle, and it is determined in advance through experimental trials and stored on the memory of the control unit 10, for example. When the rightward distance RL is equal to or shorter than the predetermined distance (step S105; Yes), the control unit 10 sets the right 1/4 of the display range VB as the non-display range NVB (step S106) . Thereby, the control unit 10 ensures the visibility of the obstacle existing in the rightward direction. In contrast, when the control unit 10 determines that the rightward distance RL is longer than the predetermined distance (step S105; No), the control unit 10 terminates the process of the flowchart.

It is noted that the leftward distance LL and the rightward distance RL to be used are not limited to the leftward distance LL and the rightward distance RL actually measured at the timing of the determination. Instead, each of the leftward distance LL and the rightward distance RL may be set to an estimate value of the leftward distance LL or the rightward distance RL to the forward obstacle on the assumption that the own vehicle runs for a predetermined time or by a predetermined distance. In particular, they may be determined on the basis of the distance in the side direction between the own vehicle and the obstacle existing ahead of the own vehicle on the left or the right. The control unit 10 may also use the road shape where the own vehicle is running and the direction of the route in order to calculate estimation values of the leftward distance LL and the rightward distance RL at the time of passing the forward obstacle. In this case, the control unit 10 recognizes the road shape where the own vehicle is running and the direction of the route based on the map data stored on the memory, the settings of the destination or the transit point which the user inputted and/or information on the present traffic regulation. In particular, when the running direction of the own vehicle is predicted to vary depending on another obstacle, the route where the own vehicle is going to run and/or the traffic regulation, the distance in the side direction between the own vehicle and the forward obstacle can be predicted to vary. Thus, it is possible to predict the distance in the side direction between the own vehicle and the forward obstacle to become longer or shorter in accordance with the running direction.

### (2). Second pattern

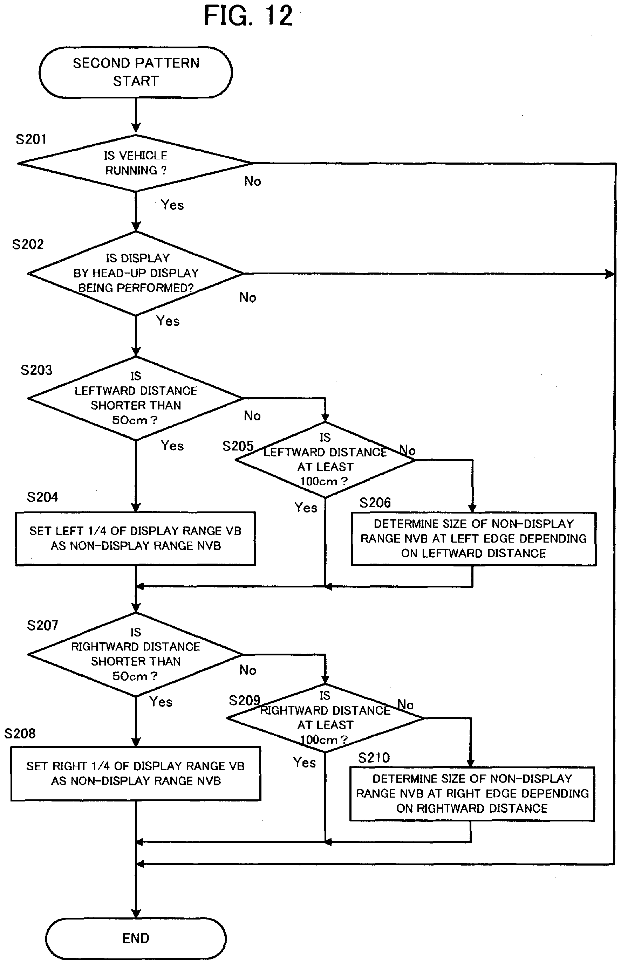

FIG. 12 shows an example of a flowchart indicating the procedure of the process executed by the control unit 10 according to the second pattern. The flowchart shown in FIG. 12 indicates an example of the process executed by the control unit 10 with reference to the correspondence table shown in FIGS. 7A and 7B. The control unit 10 repeatedly executes the process of the flowchart shown in FIG. 12 in a predetermined cycle, for example.

First, the control unit 10 determines whether or not the own vehicle is running (step S201). Then, when the control unit 10 determines that the own vehicle is running (step S201; Yes), the control unit 10 determines whether or not the display by the head-up display is being performed (step S202). When the own vehicle is not running (step S201; No) or the display by the head-up display is not being performed (step S202; No), the control unit 10 terminates the process of the flowchart.

In contrast, when the control unit 10 determines that the display by the head-up display is being performed (step S202; Yes), the control unit 10 determines whether or not the leftward distance LL is shorter than "50cm" (step S203) . The amount "50cm" herein indicates an example of a threshold of the leftward distance LL for judging the necessity to maximally restrict the display of information recognized through the virtual image Iv. Then, when the leftward distance LL is shorter than "50cm" (step S203; Yes), the control unit 10 considers it necessary to let the driver pay attention to the leftward obstacle, and sets the left 1/4 of the display range VB as the non-display range NVB (step S204). Thereby, the control unit 10 can ensure sufficient visibility of the leftward obstacle thereby to enhance the security.

In contrast, when the control unit 10 determines that the leftward distance LL is equal to or longer than "50cm" (step S203; No), the control unit 10 determines whether or not the leftward distance LL is equal to or longer than "100cm" (step S205) . The amount "100cm" herein indicates an example of a threshold of the leftward distance LL for judging the necessity to restrict the display of information recognized through the virtual image Iv. If the leftward distance LL is equal to or larger than "100cm", the control unit 10 determines that the distance to the leftward obstacle is sufficient. Then, the control unit 10 proceeds with the process at step S207 without restricting the display of information recognized through the virtual image Iv. In contrast, when the control unit 10 determines that the leftward distance LL is shorter than "100cm" (step S205; No), the control unit 10 determines the size of the non-display range NVB in accordance with the leftward distance LL, the non-display range NVB being set in the left side of the display range VB (step S206). In particular, with reference to the correspondence table shown in FIG. 7B, the control unit 10 determines the size of the non-display range NVB in accordance with the leftward distance LL.

Next, the control unit 10 determines whether or not the rightward distance RL is shorter than "50cm" (step S207). The amount "50cm" herein indicates an example of a threshold of the rightward distance RL for judging the necessity to maximally restrict the display of information recognized through the virtual image Iv. Then, when the control unit 10 determines that the rightward distance RL is shorter than "50cm" (step S207; yes), the control unit 10 sets the right 1/4 of the display range VB as the non-display range NVB (step S208).

In contrast, if the rightward distance RL is equal to or longer than "50cm" (step S207; No), the control unit 10 determines whether or not the rightward distance RL is equal to or longer than "100cm" (step S209). The amount "100cm" herein indicates an example of a threshold of the rightward distance RL for judging the necessity to restrict the display of information recognized through the virtual image Iv. When the rightward distance RL is equal to or larger than "100cm" (step S209; Yes), the control unit 10 considers the rightward distance RL sufficiently long, and terminates the process of the flowchart without setting the non-display range NVB in the right side of the display range VB. In contrast, when the rightward distance RL is shorter than "100cm" (step S209; No), the control unit 10 determines the size of the non-display range NVB in accordance with the rightward distance RL, the non-display range NVB being set in the right side of the display range VB (step S210). In particular, the control unit 10 determines the size of the non-display range NVB in accordance with the rightward distance RL with reference to the table shown in FIG. 7A.

### (3)Third Pattern

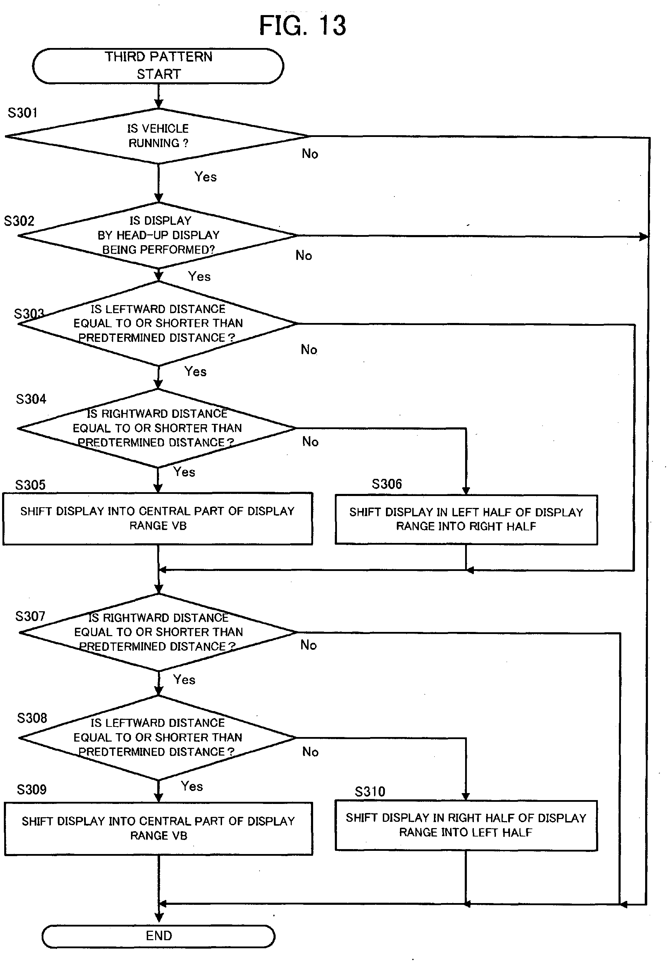

FIG. 13 shows an example of a flowchart indicating the procedure of the process executed by the control unit 10 according to the third pattern. The control unit 10 repeatedly executes the process of the flowchart shown in FIG. 13 in a predetermined cycle, for example.

First, the control unit 10 determines whether or not the own vehicle is running (step S301). When the control unit 10 determines that the own vehicle is running (step S301; Yes), the control unit 10 determines whether or not the display by the head-up display is being performed (step S302). When the own vehicle is not running (step S301; No) or the display by the head-up display is not being performed (step S302; No), the control unit 10 terminates the process of the flowchart.

In contrast, when the control unit 10 determines that the display by the head-up display is being performed (step S302; Yes), the control unit 10 determines whether or not the leftward distance LL is equal to or shorter than a predetermined distance (step S303) . The term "predetermined distance" herein indicates the threshold of the leftward distance LL between the own vehicle and the obstacle for judging the necessity for the driver to especially pay attention to the obstacle, and it is determined in advance through experimental trials and stored on the memory of the control unit 10, for example. When the control unit 10 determines that the leftward distance LL is longer than the predetermined distance (step S303; No), the control unit 10 determines that there is no obstacle on the left to be especially noted by the driver. Thus, the control unit 10 proceeds with the process at step S307.

In contrast, when the leftward distance LL is equal to or shorter than the predetermined distance (step S303; Yes), the control unit 10 further determines whether or not the rightward distance RL is equal to or shorter than a predetermined distance (step S304) . The term "predetermined distance" herein indicates the threshold of the rightward distance RL for judging the necessity for the driver to especially pay attention to the obstacle, and it is determined in advance through experimental trials and stored on the memory of the control unit 10, for example.

When the rightward distance RL is equal to or shorter than the predetermined distance (step S304; Yes), the control unit 10 determines that there are obstacles to be noted on the left and on the right. Thus, the control unit 10 shifts the display to a central part (having the half size, for example) of the display range VB (step S305). Namely, the control unit 10 sets each of the left 1/4 and the right 1/4 of the display range VB as the non-display range NVB, and shifts the display to be originally displayed in the non-display range NVB into the other part of the display range VB in the center. Thereby, the control unit 10 ensures the visibility of the rightward obstacle and the leftward the obstacle, and ensures the security.

In contrast, when the control unit 10 determines that the rightward distance RL is longer than the predetermined distance (step S304; No), the control unit 10 shifts the display to be displayed in the left half of the display range VB into the right half of the display range VB (step S306). Thereby, the control unit 10 can ensure the visibility of the leftward obstacle near the own vehicle.

Next, the control unit 10 determines whether or not the rightward distance RL is equal to or shorter than a predetermined distance (step S307). The above predetermined distance coincides with the predetermined distance used at step S304. When the control unit 10 determines that the rightward distance RL is longer than the predetermined distance (step S307; No), the control unit 10 determines that there is no obstacle to be noted on the right. Thus, the control unit 10 terminates the process of the flowchart.

In contrast, when the rightward distance RL is equal to or shorter than the predetermined distance (step S307; Yes), the control unit 10 additionally determines whether or not the leftward distance LL is equal to or shorter than a predetermined distance (step S308) . The above predetermined distance coincides with the predetermined distance used at step S303. When the leftward distance LL is equal to or shorter than the predetermined distance (step S308; Yes), the control unit 10 shifts the display into the central part of the display range VB in the same way as the process at step S305 (step S309). When the control unit 10 determines that the leftward distance LL is longer than the predetermined distance (step S308; No), the control unit 10 shifts the display in the right half of the display range VB into the left half of the display range VB (step S310). Thereby, the control unit 10 can ensure the visibility of the rightward obstacle near the own vehicle.

### (4)Fourth Pattern

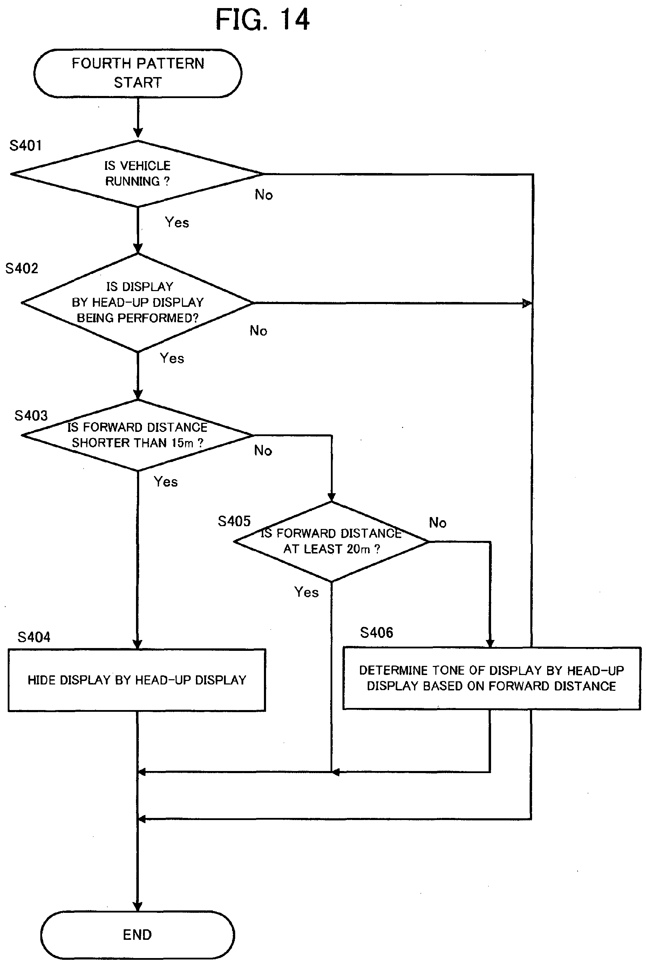

FIG. 14 shows an example of a flowchart indicating the procedure of the process executed by the control unit 10 according to the fourth pattern. The flowchart shown in FIG. 14 indicates an example of the process executed by the control unit 10 with reference to the correspondence table shown in FIG. 10. The control unit 10 repeatedly executes the process of the flowchart shown in FIG. 14 in a predetermined cycle, for example.

First, the control unit 10 determines whether or not the own vehicle is running (step S401). When the control unit 10 determines that the own vehicle is running (step S401; Yes), the control unit 10 determines whether or not the display by the head-up display is being performed (step S402) . When the own vehicle is not running (step S401; No) or the display by the head-up display is not being performed (step S402; No), the control unit 10 terminates the process of the flowchart.

In contrast, when the control unit 10 determines that the display by the head-up display is being performed (step S402; Yes), the control unit 10 determines whether or not the forward distance FL is shorter than "15m" (step S403). If the forward distance FL is shorter than "15m" (step S403; Yes), the control unit 10 determines that the inter-vehicular distance to the forward vehicle is short enough for the driver to need to pay attention to the forward vehicle. Thus, the control unit 10 hides the display by the head-up display (step S404).

In contrast, if the forward distance FL is equal to or longer than "15m" (step S403; No), the control unit 10 determines whether or not the forward distance FL is equal to or longer than "20m" (step S405) . If the forward distance FL is equal to or longer than "20m" (step S405; Yes), the control unit 10 determines that the inter-vehicular distance to the forward vehicle is sufficiently long. Thus, the control unit 10 terminates the process of the flowchart without changing the tone of the display by the head-up display. In contrast, when the forward distance FL is shorter than "20m" (step S405; No), the control unit 10 determines the tone of the display by the head-up display based on the forward distance FL (step S406). In particular, with reference to the table shown in FIG. 10, the shorter the forward distance FL is, the more the control unit 10 lightens the display by the head-up display. Thereby, as the forward distance FL is shorter, the control unit 10 further enhances the visibility of the forward vehicle thereby to let the driver notice the forward vehicle.

### [Modification]

Hereinafter, preferred modifications of the above-mentioned embodiment will be described below. Each modification mentioned later can be applied to the above-mentioned embodiment in combination.

### (First Modification)

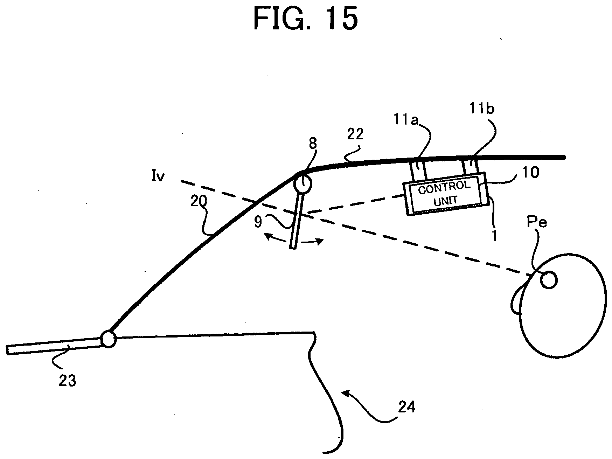

The configuration of the head-up display to which the present invention can be applied is not limited to the configuration shown in FIG. 1. FIG. 15 shows an example of another configuration of the head-up display according to the present invention. The head-up display shown in FIG. 15 is different from the configuration shown in FIG. 1 in that it lets the driver visually recognize the virtual image Iv through the combiner 9.

According to the configuration shown in FIG. 15, the light source unit 1 projects the display image onto the combiner 9 under the control of the control unit 10. The display image emitted from the light source unit 1 is projected onto the combiner 9, and the combiner 9 displays the display image as the virtual image Iv by reflecting the display image to the eye point Pe of the driver. The combiner 9 also has a support shaft unit 8 provided on the ceiling board 22, and rotates on the support shaft unit 8. For example, the support shaft unit 8 is provided on the ceiling board 22 near the top edge of the front window 20 i.e., near the position where an unshown sun visor for the driver is provided. It is noted that the support shaft unit 8 may be provided instead of the above-mentioned sun visor.

In this way, the head-up display projects the light onto the combiner 9 instead of the front window 20 thereby to let the driver see the virtual image Iv. The combiner 9 is an example of "projection portion" according to the present invention.

The light source unit 1 may be provided inside of the dashboard 24 instead of being provided on the ceiling board 22. In this case, on the dashboard 24, there is provided an aperture for letting the light passing towards the combiner 9 or the front window 20.

### (Second Modification)

According to the explanation of the first pattern and the second pattern with reference to FIGS. 11 and 12, the control unit 10 sets a predetermined range of the display range VB expanding from the right edge or the left edge thereof as the non-display range NVB if the rightward distance RL or the leftward distance LL is equal to or shorter than a predetermined distance. The method to which the present invention can be applied, however, is not limited to the method.

In addition to this, in case of the first pattern or the second pattern, the control unit 10 may set a predetermined range that is a central part of the display range VB as the non-display range NVB if the forward distance FL is equal to or shorter than a predetermined distance. In this case, according to the second pattern, the short the forward distance FL between the own vehicle and the obstacle is, the more the control unit 10 expands the non-display range NVB to be set in stages in the similar way to the correspondence table shown in FIG. 7.

Even in this manner, the control unit 10 can surely ensure the visibility of the forward vehicle when the inter-vehicular distance to the forward vehicle is short.

### (Third Modification)

As shown in FIG. 9A, according to the fourth pattern, as the distance between the obstacle and the own vehicle is shorter, the control unit 10 further lightens the whole display by the head-up display. Instead, the control unit 10 may lighten only the uniformly-colored area of the display of information recognized through the virtual image Iv such as the background and keep the tone in the other part such as an edge part unchanged. Thereby, the control unit 10 can enhance the visibility of the forward vehicle and keep the necessary driving assistance information displayed even when the distance between the own vehicle and the forward vehicle is short.

In this case, the third pattern is preferably applied. In particular, if the distance between the own vehicle and the obstacle is short, the control unit 10 limits the display range to the right side, the left side, or the central part based on the position of the obstacle according to the third pattern, and lightens only the uniformly-colored area, i.e., the area other than lines, according to the fourth pattern. Thereby, the control unit 10 can suppress the deterioration of the visibility of the virtual image Iv due to the high display density associated with the reduction of the display range.

### (Fourth Modification)

Regarding the fourth pattern, the control unit 10 may lighten the virtual image Iv in stages as the rightward distance RL and/or the leftward distance LL between the own vehicle and the obstacle is shorter, in addition to or instead of the case where the forward distance FL between the own vehicle and the obstacle is short. In this case, preferably, the control unit 10 prepares another correspondence table relating to the rightward distance RL and/or the leftward distance LL in addition to the correspondence table relating to the forward distance FL shown in FIG. 10, and stores it on the memory in advance.

### (Fifth Modification)

There are cases where it is preferred to change the threshold (the predetermined distance) of the rightward distance RL and the leftward distance LL depending on the size or/and the shape of the vehicle on which the head-up display is mounted, the threshold being used as a criterion for hiding a part of the virtual image Iv and/or lightening the virtual image Iv. In consideration of the above-mentioned fact, the head-up display may additionally have an input unit and accepts the user input concerning information on the type, the size and/or the shape of the own vehicle in advance at the time of the start of the use of the head-up display, for example. Then, the control unit 10 sets the threshold (the predetermined distance) to a proper value based on the inputted information. Thereby, it is possible to enhance the visibility for the driver. For example, the control unit 10 may store a map of the threshold (the predetermined distance) corresponding to the type, the size and/or the shape of the own vehicle on its memory in advance, and determine the threshold (the predetermined distance) based on the user input with reference to the map. The threshold corresponding to the rightward distance RL and the threshold corresponding to the leftward distance LL may be different depending on whether the own vehicle is a right-hand drive vehicle or a left-hand drive vehicle. For example, in this case, the control unit 10 has the above-mentioned maps of each threshold (each predetermined distance) corresponding to the rightward distance RL and the leftward distance LL.

### INDUSTRIAL APPLICABILITY

Preferably, this invention can be applied to a head-up display displaying the route information for guiding the driver and the vehicle information for the driver.

### BRIEF DESCRIPTION OF REFERENCE NUMBERS

1 Light source unit
8 Support shaft unit
9 Combiner
10 Control unit
20 Front window
23 Hood
24 Dashboard
30 Forward distance detecting sensor
31 Rightward distance detecting sensor
32 Leftward distance detecting sensor
33 Speed sensor

## Claims

1. A head-up display comprising:
an acquiring unit (30, 31, 32, 33) configured to acquire distances, in a running direction of the own vehicle and in the perpendicular direction to the running direction, between an own vehicle (3) and an obstacle (4, 5A, 5B, 6);
a light source unit (1) having an attaching portion (11a, 11b) and projecting light for displaying an image onto a projection portion (9, 20) to supply a viewer with the light through the projection portion, the attaching portion being capable of attaching to the own vehicle; and
a control unit (10), the head-up display is **characterized in that** the control unit is configured to restrict display of a part of information at a time when the own vehicle and the obstacle pass each other or a predetermined time before the time if a distance, to right-hand or left-hand direction of the own vehicle perpendicular to the running direction, between the own vehicle and the obstacle is equal to or shorter than a predetermined criterion distance when the own vehicle passes the obstacle by moving towards the running direction.

2. The head-up display according to claim 1, further comprising
a unit (10) configured to recognize a shape of a road where the own vehicle is going to run or a route where the own vehicle is going to run,
wherein the control unit restricts the display of information by the light source unit if the distance, to the right-hand or the left-hand direction, between the obstacle and the own vehicle is equal to or shorter than the predetermined criterion distance when the own vehicle has moved based on the shape of the road or the route.

3. The head-up display according to claim 1 or 2, further comprising
an input unit for accepting an input of attribute information relating to the own vehicle,
wherein the control unit determines the criterion distance based on the inputted attribute information.

4. The head-up display according to claim 3,
wherein the attribute information is information on a position of a steering wheel of the own vehicle, and
wherein the control unit changes the criterion distance corresponding to the left-hand direction of the own vehicle and the criterion distance corresponding to the right-hand direction of the own vehicle based on the inputted attribute information.

5. The head-up display according to any one of claims 1 to 4,
wherein the control unit limits a range of the display based on positional relationship between the own vehicle and the obstacle.

6. The head-up display according to any one of claims 1 to 5,
wherein the shorter the distance between the own vehicle and the obstacle is, the more the control unit expands a range where the display is restricted.

7. The head-up display according to any one of claims 1 to 6,
wherein the control unit limits a range of the display based on positional relationship between the own vehicle and the obstacle and shifts the display to be displayed in a restricted range into a non-restricted range.

8. The head-up display according to any one of claims 1 to 7,
wherein the shorter the distance between the own vehicle and the obstacle is, the more the control unit lightens all or a part of the display.

9. The head-up display according to claim 8,
wherein the control unit lightens only a uniformly-colored area of the display.

10. The head-up display according to any one of claims 1 to 9,
wherein the obstacle is an oncoming vehicle to the own vehicle.

11. The head-up display according to any one of claims 1 to 10,
wherein the projection portion is a front window (20) of the own vehicle or a combiner (9) arranged near the front window, and
wherein the light source unit projects light onto the front window or the combiner to display the information recognized through a virtual image.

12. A control method executed by a head-up display, the head-up display attaching to a vehicle, the head-up display including an acquiring unit (30, 31, 32, 33) and a light source unit (1), the acquiring unit being configured to acquire distances, in a running direction of the own vehicle and in the perpendicular direction to the running direction, between an own vehicle (3) and an obstacle (4, 5A, 5B, 6, the light source unit projecting light for displaying an image onto a projection portion(9, 20) to supply a viewer with the light through the projection portion, the control method comprising
a control process to restrict display of a part of information at a time when the vehicle and the obstacle pass each other or a predetermined time before the time if a distance, between the vehicle and the obstacle is equal to or shorter than a predetermined criterion distance when the vehicle passes the obstacle by moving towards the running direction.

## Patentansprüche

1. Blickfeldanzeige, umfassend:
eine Erfassungseinheit (30, 31, 32, 33), die konfiguriert ist, um Entfernungen in einer Fahrtrichtung des eigenen Fahrzeugs und in senkrechter Richtung zur Fahrtrichtung zwischen einem eigenen Fahrzeug (3) und einem Hindernis (4, 5A, 5B, 6) zu erfassen;
eine Lichtquelleneinheit (1) mit einem Befestigungsabschnitt (11a, 11b) und zum Projizieren von Licht zum Anzeigen eines Bildes auf einem Projektionsabschnitt (9, 20), um einen Betrachter mit Licht durch den Projektionsabschnitt zu versorgen, wobei der Befestigungsabschnitt an das eigene Fahrzeug befestigungsfähig ist; und
eine Steuereinheit (10), wobei die Blickfeldanzeige **dadurch gekennzeichnet ist, dass** die Steuereinheit so konfiguriert ist, dass sie die Anzeige eines Teils von Informationen zu einem Zeitpunkt, wenn sich das eigene Fahrzeug und das Hindernis aneinander vorbeibewegen, oder zu einem vorbestimmten Zeitpunkt vor dem Zeitpunkt, wenn eine Entfernung in die Rechts- oder Linksrichtung des eigenen Fahrzeugs senkrecht zur Fahrtrichtung zwischen dem eigenen Fahrzeug und dem Hindernis gleich oder kürzer ist als eine vorgegebene Kriteriumsentfernung, wenn das eigene Fahrzeug das Hindernis passiert, indem es sich in Fahrtrichtung bewegt, einschränkt.

2. Blickfeldanzeige nach Anspruch 1, ferner umfassend eine Einheit (10), die konfiguriert ist, um eine Form einer Straße zu erkennen, auf der sich das eigene Fahrzeug bewegt, oder einer Strecke, auf der sich das eigene Fahrzeug bewegt, wobei die Steuereinheit die Anzeige von Informationen durch die Lichtquelleneinheit einschränkt, wenn die Entfernung zwischen dem Hindernis und dem eigenen Fahrzeug in die Rechts- oder Linksrichtung gleich oder kürzer als die vorgegebene Kriteriumsentfernung ist, wenn sich das eigene Fahrzeug auf Basis der Form der Straße oder der Strecke bewegt hat.

3. Blickfeldanzeige nach Anspruch 1 oder 2, ferner umfassend eine Eingabeeinheit zum Annehmen einer Eingabe von Attributinformationen bezüglich des eigenen Fahrzeugs, wobei die Steuereinheit die Kriteriumsentfernung auf Basis der eingegebenen Attributinformationen bestimmt.

4. Blickfeldanzeige nach Anspruch 3, wobei die Attributinformationen Informationen über eine Position eines Lenkrads des eigenen Fahrzeugs sind, und wobei die Steuereinheit die der Linksrichtung des eigenen Fahrzeugs entsprechende Kriteriumsentfernung und die der Rechtsrichtung des eigenen Fahrzeugs entsprechende Kriteriumsentfernung auf Basis der eingegebenen Attributinformationen ändert.

5. Blickfeldanzeige nach einem der Ansprüche 1 bis 4, wobei die Steuereinheit einen Bereich der Anzeige auf Basis der Positionsbeziehung zwischen dem eigenen Fahrzeug und dem Hindernis einschränkt.

6. Blickfeldanzeige nach einem der Ansprüche 1 bis 5, wobei je kürzer die Entfernung zwischen dem eigenen Fahrzeug und dem Hindernis ist, desto mehr erweitert die Steuereinheit einen Bereich, in dem die Anzeige eingeschränkt ist.

7. Blickfeldanzeige nach einem der Ansprüche 1 bis 6, wobei die Steuereinheit einen Bereich der Anzeige auf Basis der Positionsbeziehung zwischen dem eigenen Fahrzeug und dem Hindernis einschränkt und die in einem eingeschränkten Bereich anzuzeigende Anzeige in einen nicht eingeschränkten Bereich verschiebt.

8. Blickfeldanzeige nach einem der Ansprüche 1 bis 7, wobei je kürzer die Entfernung zwischen dem eigenen Fahrzeug und dem Hindernis ist, desto mehr hellt die Steuereinheit die gesamte oder einen Teil der Anzeige auf.

9. Blickfeldanzeige nach Anspruch 8, wobei die Steuereinheit nur eine einheitlich gefärbte Fläche der Anzeige aufhellt.

10. Blickfeldanzeige nach einem der Ansprüche 1 bis 9, wobei das Hindernis für das eigene Fahrzeug ein entgegenkommendes Fahrzeug ist.

11. Blickfeldanzeige nach einem der Ansprüche 1 bis 10, wobei der Projektionsabschnitt eine Frontscheibe (20) des eigenen Fahrzeugs oder ein in der Nähe der Frontscheibe angeordneter Kombinator (9) ist und wobei die Lichtquelleneinheit Licht auf die Frontscheibe oder den Kombinator projiziert, um die durch ein virtuelles Bild erkannten Informationen anzuzeigen.

12. Durch eine Blickfeldanzeige ausgeführtes Steuerungsverfahren, wobei die Blickfeldanzeige an einem Fahrzeug befestigt ist, wobei die Blickfeldanzeige eine Erfassungseinheit (30, 31, 32, 33) und eine Lichtquelleneinheit (1) umfasst, wobei die Erfassungseinheit konfiguriert ist, in einer Fahrtrichtung des eigenen Fahrzeugs und in der zur Fahrtrichtung senkrechten Richtung Entfernungen zwischen einem eigenen Fahrzeug (3) und einem Hindernis (4, 5A, 5B, 6) zu erfassen, wobei die Lichtquelleneinheit Licht zum Anzeigen eines Bildes auf einen Projektionsabschnitt (9, 20) projiziert, um einen Betrachter mit Licht durch den Projektionsabschnitt zu versorgen, wobei das Steuerungsverfahren einen Steuerungsprozess umfasst, um die Anzeige eines Teils von Informationen zu einem Zeitpunkt, wenn sich das Fahrzeug und das Hindernis aneinander vorbeibewegen, oder zu einem vorbestimmten Zeitpunkt vor dem Zeitpunkt, wenn eine Entfernung zwischen dem Fahrzeug und dem Hindernis gleich oder kürzer als eine vorgegebene Kriteriumsentfernung ist, wenn das Fahrzeug das Hindernis passiert, indem es sich in Fahrtrichtung bewegt, einzuschränken.

## Revendications

1. Affichage tête haute comprenant :
une unité d'acquisition (30, 31, 32, 33) configurée pour acquérir des distances, dans un sens de circulation du véhicule personnel et dans le sens perpendiculaire au sens de circulation, entre un véhicule personnel (3) et un obstacle (4, 5A, 5B, 6) ;
une unité de source lumineuse (1) ayant une partie de fixation (11a, 11b) et une lumière de projection pour afficher une image sur une partie de projection (9, 20) afin de fournir à un observateur la lumière à travers la partie de projection, la partie de fixation pouvant être fixée au véhicule personnel ; et
une unité de commande (10), l'affichage tête haute est **caractérisé en ce que** l'unité de commande est configurée pour restreindre l'affichage d'une partie des informations à un moment où le véhicule personnel et l'obstacle se croisent ou à un moment préalable prédéterminé si une distance, à droite ou à gauche du véhicule personnel perpendiculaire au sens de circulation, entre le véhicule personnel et l'obstacle est égale ou inférieure à un critère de distance prédéterminé lorsque le véhicule personnel franchit l'obstacle en se déplaçant dans le sens de circulation.

2. Affichage tête haute selon la revendication 1, comprenant en outre une unité (10) configurée pour reconnaître une forme d'une route sur laquelle le véhicule personnel va rouler ou une autoroute sur laquelle le véhicule personnel va rouler, dans lequel l'unité de commande limite l'affichage des informations par l'unité de source lumineuse si la distance, à droite ou à gauche, entre l'obstacle et le véhicule personnel, est égale ou inférieure au critère de distance prédéterminé lorsque le véhicule personnel s'est déplacé sur la base de la forme de la route ou de l'autoroute.

3. Affichage tête haute selon la revendication 1 ou 2, comprenant en outre une unité d'entrée destinée à accepter une entrée des informations d'attribut relatives au véhicule personnel, l'unité de commande déterminant le critère de distance sur la base des informations d'attribut entrées.

4. Affichage tête haute selon la revendication 3, dans lequel l'information d'attribut est une information sur la position d'un volant du véhicule personnel, et l'unité de commande modifiant le critère de distance correspondant à la gauche du véhicule personnel et le critère de distance correspondant à la droite du véhicule personnel sur la base des informations d'attribut entrées.

5. Affichage tête haute selon l'une quelconque des revendications 1 à 4, dans lequel l'unité de commande limite une plage de l'affichage sur la base de la position relative entre le véhicule personnel et l'obstacle.

6. Affichage tête haute selon l'une quelconque des revendications 1 à 5, dans lequel plus la distance entre le véhicule personnel et l'obstacle est courte, plus l'unité de commande étend une plage dans laquelle l'affichage est restreint.

7. Affichage tête haute selon l'une quelconque des revendications 1 à 6, dans lequel l'unité de commande limite une plage de l'affichage sur la base de la position relative entre le véhicule personnel et l'obstacle et déplace l'affichage à afficher d'une plage restreinte vers une plage non restreinte.

8. Affichage tête haute selon l'une quelconque des revendications 1 à 7, dans lequel plus la distance entre le véhicule personnel et l'obstacle est courte, plus l'unité de commande illumine tout ou partie de l'affichage.

9. Affichage tête haute selon la revendication 8, dans lequel l'unité de commande n'illumine qu'une zone uniformément colorée de l'affichage.

10. Affichage tête haute selon l'une quelconque des revendications 1 à 9, dans lequel l'obstacle est un véhicule venant en sens inverse au véhicule personnel.

11. Affichage tête haute selon l'une quelconque des revendications 1 à 10, dans lequel la partie de projection est une fenêtre avant (20) du véhicule personnel ou un combinateur (9) agencé à proximité de la fenêtre avant, et l'unité de source lumineuse projetant de la lumière sur la fenêtre avant ou le combinateur pour afficher les informations reconnues au moyen d'une image virtuelle.

12. Procédé de commande exécuté par un affichage tête haute, l'affichage tête haute se fixant à un véhicule, l'affichage tête haute incluant une unité d'acquisition (30, 31, 32, 33) et une unité de source lumineuse (1), l'unité d'acquisition étant configurée pour acquérir des distances, dans le sens de circulation du véhicule personnel et perpendiculairement au sens de circulation, entre un véhicule personnel (3) et un obstacle (4, 5A, 5B, 6), l'unité de source lumineuse projetant de la lumière pour afficher une image sur une partie de projection (9, 20) afin de fournir à un observateur de la lumière à travers la partie de projection, le procédé de commande comprenant un processus de commande pour restreindre l'affichage d'une partie des informations à un moment où le véhicule et l'obstacle se croisent ou à un moment prédéterminé préalable si une distance, entre le véhicule et l'obstacle, est égale ou inférieure à un critère de distance prédéterminé lorsque le véhicule franchit l'obstacle en se déplaçant dans le sens de circulation.
